# EUROPEAN PATENT SPECIFICATION

(11) **EP 3 297 110 B1**
(45) Date of publication and mention of the grant of the patent: **18.10.2023**
(21) Application number: 17191806.3
(22) Date of filing: 19.09.2017
(51) Int. Cl.: H02G 3/12, H02G 3/20

(54) **MOUNTING SYSTEM FOR CEILING OR WALL DEVICE**
MONTAGESYSTEM FÜR DECKEN- ODER WANDVORRICHTUNG
SYSTÈME DE MONTAGE POUR DISPOSITIF DE PAROI OU DE PLAFOND

(30) Priority: 19.09.2016 BE 201605703
(43) Date of publication of application: 21.03.2018
(73) Proprietor: Niko NV, 9100 Sint-Niklaas (BE)
(72) Inventor: VERHEULE, Gert, 2620 Hemiksem (BE); DE VOS, Pieter, 8000 Brugge (BE)
(74) Representative: Winger

(56) References cited:
- WO-A1-2015/062972
- WO-A2-2012/042232
- FR-A3- 2 797 357
- GB-A- 2 446 430
- GB-A- 2 460 294
- US-A- 3 229 939
- US-A- 4 053 082
- US-A1- 2005 024 883

## Description

### Technical field of the invention

The present invention relates to a mounting system for mounting a ceiling or wall device, such as sensors, controllers, actuators, lighting means, speakers or the like, in a ceiling or a wall.

### Background of the invention

Ceiling or wall devices may, for example, be sensors for e.g. temperature, daylight or motion detection, controllers, actuators, lighting means, speakers or the liken and are suitable for being mounted on a wall or on a ceiling of a building.

However, mounting of ceiling or wall devices in, for example, a ceiling can be tricky, because ceilings can be differently formed in different countries. For example, in some countries ceilings may be formed by foam tiles while in other countries ceilings may be made out of materials such as plaster board, metal, concrete or the like. Further, also the mounting of such home automation system elements in walls may not be straightforward because of different materials that can be used to build a ceiling or wall, such as bricks, MFD board, plaster board, or the like. Use of different materials can result in different thicknesses of the ceiling or wall.

Currently, ceiling or wall devices such as, for example, sensors may comprise springs mounted on the sensor for mounting the sensor on a ceiling or in a wall by means of the springs. The sensor is, while the springs are pushed against the sensor, put through a hole in the ceiling after which the springs are released and snap outwards so as to mount the sensor in the ceiling.

A disadvantage of such mounting methods is that the springs can cause the ceiling or wall material to be damaged in case of softer materials. Further, when the sensor, or in general the ceiling or wall device, has to removed or replaced, the springs can also cause damage to the hole through which the ceiling or wall device is mounted in or on the ceiling or wall.

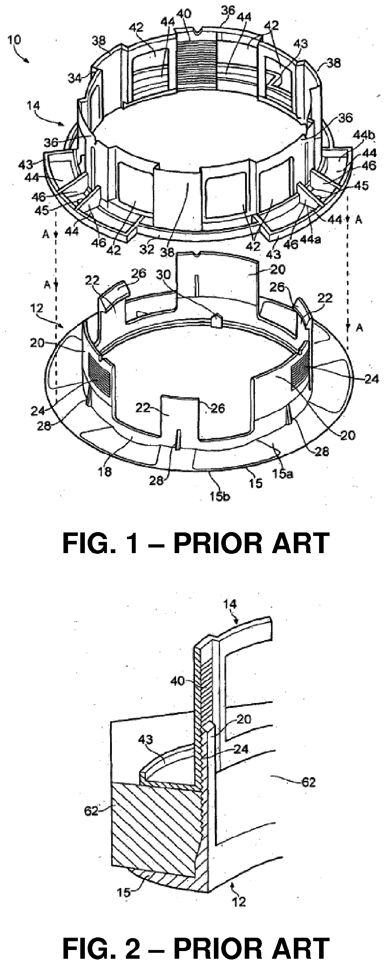

EP 2 622 696 describes a mounting system 10 for mounting an electrical component to a panel, such as a ceiling tile (see Fig. 1). The mounting system 10 comprises a first part, referred to as bezel 12, and a second part, referred to as clamp 14. The bezel 12 is adapted to surround an electrical component where the component is positioned in a hole in a ceiling or wall so as to conceal the internal the internal edge of the hole and leave an aesthetically pleasing finish.

Bezel 12 comprises a wall 18 extending from a flat side 15a of a bezel ring 15. Arms 20 extend from the wall 18 and comprise a plurality of wedge-shaped locking ridges 24 extending from an outer surface thereof. The clamp 14 comprises a cylindrical ring 32 and a cylindrical wall 34 extending upwards from an inner edge of the ring 32. The wall 34 comprises a number of radially recessed regions 36 which correspond in terms of shape and size to the arms 22 of the bezel 12. The wall 34 has, at each recess 36, a plurality of locking ridges 40, which complement the locking ridges 24 formed on the outer surface of each of the arms 20 on the bezel 12. As the locking ridges 24 on the bezel 12 engage the corresponding locking ridges 40 on the clamp 14, the complementary ridges form a ratchet-type lock, which restricts any movement of the clamp 14 in a direction opposite to direction A (see Fig. 1). The bezel 12 and clamp 14 lock together as soon as the first of the locking ridges 24, 40 engage each other. As a result, the mounting system 10 is capable of being mounted to any ceiling tile 62 or panel having a range of thicknesses (see Fig. 2).

Whenever it is desirable to separate the bezel 12 and the clamp 14, to remove the mounting system 10 from the tile 62, pressure has to be applied to the arms 20 through the holes 42 adjacent to the locking ridges 40 on the clamp 14. Applying pressure to the arms 20 causes the locking ridges 24, 40 to be separated, and allows the clamp 14 to be lifted off the bezel 12, in a direction opposite to the direction A. A disadvantage of the mounting system 10 according to EP 2 622 696 may be that, when the tiles 62 are mounted to the ceiling, these holes may be difficult to be reached and the tile 62 needs to be removed from the ceiling before the mounting system 10 can be dismounted. This is time consuming and not always easy to do.

US4053082A discloses electric an electric box assembly that can be readily installed in a weak soft panel of varying thickness without the use of extraneous fasteners.

### Summary of the invention

It is an object of embodiments of the present invention to provide a mounting system for mounting a ceiling or wall device in or on a ceiling or wall according to claim 1.

In a first aspect, the present invention provides a mounting system for mounting a ceiling or wall device, such as e.g. a sensor, lighting means, a speaker or the like, in or on a ceiling or wall. The mounting system comprises a ceiling or wall part for being provided in the ceiling or wall, and a device holding part for receiving the ceiling or wall device. The ceiling or wall part and the device holding part further comprise connecting means adapted for removably fixing the device holding part to the ceiling or wall part, such that, when being installed, the ceiling or wall is in between the ceiling or wall part and the device holding part.

In that way the ceiling or wall device is fixedly mounted to the wall or ceiling without the need for using screws or the like.

According to the invention, the connecting means on the device holding part and the ceiling or wall part comprise at least a first part and a second part for fixing the device holding part to the ceiling or wall part by means of a combination of a linear movement and a rotating movement.

A mounting system according to embodiments of the invention can be used for any type of ceiling or wall device that has to be mounted on or in a ceiling or wall of a building. Further, with a mounting system according to the invention, there is no need for using screws to fix the ceiling or wall device to the ceiling or wall. Further, a mounting system according to the invention can easily be dismounted by making a rotation movement in an opposite direction than for mounting the mounting system. In that way, the mounting system can easily be removed from the ceiling or wall without having to remove, for example, a ceiling tile from the ceiling.

The ceiling or wall part may have a first part lying in a first plane and a second part attached to the first part and lying in a second plane substantially perpendicular to the first plane.

The connecting means are further be adapted for, when being installed, adjusting the distance between the ceiling or wall part and the device holding part.

This allows making the space between the ceiling or wall part and the device holding part adjustable. In other words, this allows adjusting the size of the space between the ceiling or wall part and the device holding part of the mounting system when it is mounted in a ceiling or in a wall. Depending on the thickness of the ceiling or wall, the distance between the ceiling or wall part and the device holding part can be made bigger or smaller by bringing the parts respectively further away from each other or closer together. In that way, the ceiling or wall can be clamped between the ceiling or wall part and the device holding part. Because the distance between the ceiling or wall part and the device holding part of the mounting system can be adjusted, the mounting system and thus also the home automation element can be firmly mounted on the ceiling or wall, independent of the kind of ceiling or wall and independent of whether the ceiling or wall has a flat surface or not. According to the invention, the first part of the connecting means comprise at least one rib on an inner surface of the second part of the ceiling or wall part and the second part of the connecting means comprise at least one partial screw thread and at least one rib guiding part on an outer surface of the second part of the device holding part.

According to further embodiments, the ceiling or wall part may comprise means for further fixing the mounting system in a hole in the ceiling or wall. The ceiling or wall part may comprise a fist part lying in a first plane and a second part attached to the first part and lying in a second plane substantially perpendicular to the first plane. According to embodiments of the invention, the means for further fixing the mounting system in or to the ceiling or wall may be provided on an outer surface of the second part. According to other embodiments of the invention, the means for further fixing the mounting system in or to the ceiling or wall may be provided on a surface of the first part. For example, this means for further fixing the mounting system in or on the ceiling or wall may, according to embodiments of the invention, comprise ridges on at least part of the circumference of an outer surface of the second part of the ceiling or wall part. According to embodiments not covered by the present invention, the ridges may be provided along the complete circumference of the second part, while according to other embodiments of the invention the ridges are only provided on part of the circumference of the second part of the ceiling or wall part. According to specific embodiments not covered by the present invention, for example in case of ceiling or wall comprising metal sheets, the first part of the ceiling or wall part may comprises at least one magnet on a surface facing the ceiling or wall in order to further fix the mounting system to the ceiling or wall. The magnet may be provided on a side of the first part of the ceiling or wall part opposite to the side of the first part that is facing the second part of the ceiling or wall part.

According to embodiments not covered by the present invention in which part of the ceiling or wall cannot be removed for mounting the ceiling or wall device, the ceiling or wall part may be foldable. In that way, the ceiling or wall part may be provided in a folded state to the hidden side of the ceiling or wall by providing it through a hole in the ceiling or wall, after which it can be unfolded for fixing it to the ceiling or wall.

The ceiling or wall device may, according to embodiments of the invention, be one of a sensor, a controller, an actuator, lighting means or a speaker, or any other ceiling or wall device.

According to embodiments not covered by the invention, the ceiling or wall device may be formed integrally with the device holding part of the mounting system, or in other words may be formed as one part with the device holding part of the mounting system.

In a second aspect, not covered by the invention, the present invention provides a method for mounting a ceiling or wall device, such as e.g. a sensor, lighting means, a speaker or the like, in or on a ceiling or wall thereby using a mounting system according to embodiments of the invention. The method comprises
- providing a mounting system comprising a ceiling or wall part for being provided in the ceiling or wall, and a device holding part for receiving the ceiling or wall device, the ceiling or wall part and the device holding part further comprising connecting means adapted for removably fixing the device holding part to the ceiling or wall part, such that, when being installed, the ceiling or wall is in between the ceiling or wall part and the device holding part,
- providing the ceiling or wall part on a first side of the ceiling or wall, i.e. the side of the ceiling that is not visible for a person standing in the room, and providing the device holding part on a second, opposite side of the ceiling or wall, i.e. the side of the wall that is visible for a person standing in the room, and
- removable fixing the ceiling or wall part and the device holding part together by means of the connecting means, the ceiling or wall thereby being clamped in between the ceiling or wall part and the device holding part.

According to the the second aspect, removably fixing the ceiling or wall part and the device holding part together is done by a combination of a linear movement and a rotating movement

According to the second aspect, the method may furthermore comprise adjusting the distance between the ceiling or wall part and the device holding part by means of a rotating movement.

This allows making the space between the ceiling or wall part and the device holding part adjustable at all times. In other words, this allows adjusting the size of the space between the ceiling or wall part and the device holding part of the mounting system when it is mounted in a wall or in a ceiling. Because the distance between the ceiling or wall part and the device holding part of the mounting system can be adjusted, the mounting system and thus also the ceiling or wall device can be firmly mounted on the ceiling or wall, independent of the kind of ceiling or wall and independent of whether the ceiling or wall has a flat surface or not.

According to further embodiments, not covered by the invention, the method may furthermore comprise, before providing the ceiling or wall part on a first side of the ceiling or wall:
- folding the ceiling or wall part,
- providing the ceiling or wall part through a hole in the ceiling or wall, and
- unfolding the ceiling or wall part.

According to still further embodiments, the method may furthermore comprise:
- providing a ceiling or wall device holding part,
- connecting the ceiling or wall device to cables connected to the mains, and
- **fixing the ceiling or wall device in the device holding part.**

### Brief description of the drawings

It has to be noted that same reference signs in the different figures refer to same, similar or analogous elements.
Figs. 1 and 2 schematically illustrate a mounting system according to the prior art.
Figs. 3A and 3B, 4 and 5 schematically illustrate a mounting system according to embodiments of the invention.
Fig. 6A and 6B, 7 and 8 schematically illustrate a mounting system according to embodiments of the invention.
Figs. 9 and 10 schematically illustrate a mounting system according to embodiments of the invention.
Figs. 11A and 11B schematically illustrate a ceiling or wall part of a mounting system according to embodiments of the invention.
Figs. 12A and 12B schematically illustrate a ceiling or wall part and a mounting system using such ceiling or wall part according to embodiments of the invention.
Figs. 13A to 13D schematically illustrate steps in a method according to embodiments of the invention.
Figs. 14A and 14B schematically illustrate further steps in a method according to embodiments of the invention.
Figs. 15A and 15B schematically illustrate still further steps in a method according to embodiments of the invention.

### Description of illustrative embodiments

In the description different embodiments will be used to describe the invention. Therefore reference will be made to different drawings.

In a first aspect, the present invention provides a mounting system for mounting a ceiling or wall device in or on a ceiling or wall. The mounting system comprises a ceiling or wall part for being provided in or on the ceiling or wall and a device holding part for receiving the ceiling or wall device. With ceiling or wall device is meant any device that can be mounted on a ceiling or wall in a building, such as e.g. a sensor, lighting means, a speaker or the like. The ceiling or wall part and the device holding part further comprise connecting means adapted for removably fixing the device holding part to the ceiling or wall part, such that, when installed, the ceiling or wall is in between the ceiling or wall part and the device holding part.

In that way the ceiling or wall device is fixedly mounted to the ceiling or wall without the need for using screws or the like.

According to the invention, the connecting means on the device holding part and the ceiling or wall part comprise at least a first part and a second part for fixing the device holding part to the ceiling or wall part by means of a combination of a linear movement and a rotating movement.

A mounting system according to embodiments of the invention can be used for any type of ceiling or wall device that has to be mounted on or in a wall or ceiling of a building. Further, with a mounting system according to embodiments of the invention, there is no need for using screws to fix the ceiling or wall device to the ceiling or wall. A further advantage of a mounting system according to embodiments of the invention is that it can easily be dismounted by making a rotation movement in an opposite direction than for mounting the mounting system. In that way, the mounting system can easily be removed from the ceiling or wall without having to remove, for example, a ceiling tile from the ceiling.

The present invention will hereinafter be described by means of different embodiments. It has to be understood that these embodiments are only for the ease of understanding the invention and are not intended to limit the invention in any way.

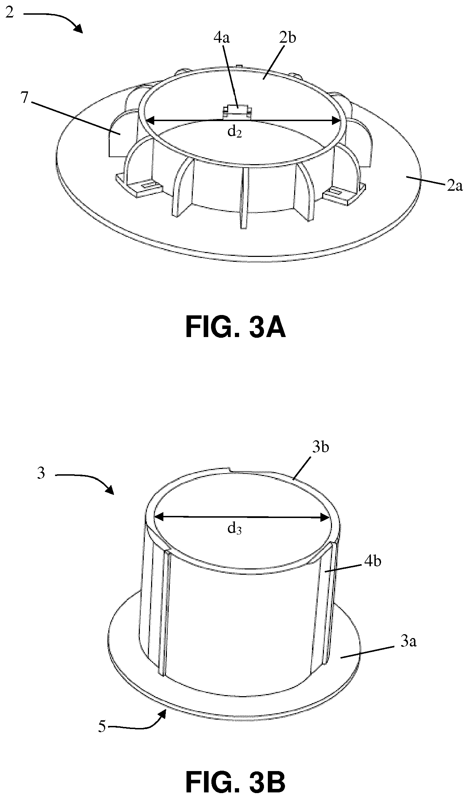

Figs. 3A and 3B, 4 and 5 schematically illustrate a mounting system 1 according to an embodiment of the invention. The mounting system 1 comprises a ceiling or wall part 2 for being provided in a ceiling or a wall of a building (see Fig. 3A). The ceiling or wall part 2 may comprise a first part 2a lying in a first plane and a second part 2b lying in a second plane substantially perpendicular to the first plane. The first part 2a is formed integrally with the second part 2b so as to form one part. In other words, the ceiling or wall part 2 may comprise two parts 2a, 2b of which the second part 2b is oriented in a direction substantially perpendicular with respect to the first part 2a. The mounting system 1 further comprises a device holding part 3 for receiving the ceiling or wall device (Fig. 3B). Also the device holding part 3 comprises two parts 3a, 3b which are integrally formed so as to constitute one part. The first part 3a lies in a first plane and the second part 2b lies in a second plane substantially perpendicular to the first plane.

The second part 2b of the ceiling or wall part 2 and the second part 3b of the device holding part 3 may both have the shape of a hollow cylinder which fit into each other, so that cables for connecting the ceiling or wall device to the mains can go through it (not shown, see further). Therefore, the diameter d2 of the second part 2b of the ceiling or wall part 2 may be slightly bigger than the diameter d3 of the second part 3b of the device holding part 3, such that for connecting the ceiling or wall part 2 and the device holding part 3, the second part 3b of the device holding part 3 can be provided into the second part 2b of the ceiling or wall part 2.

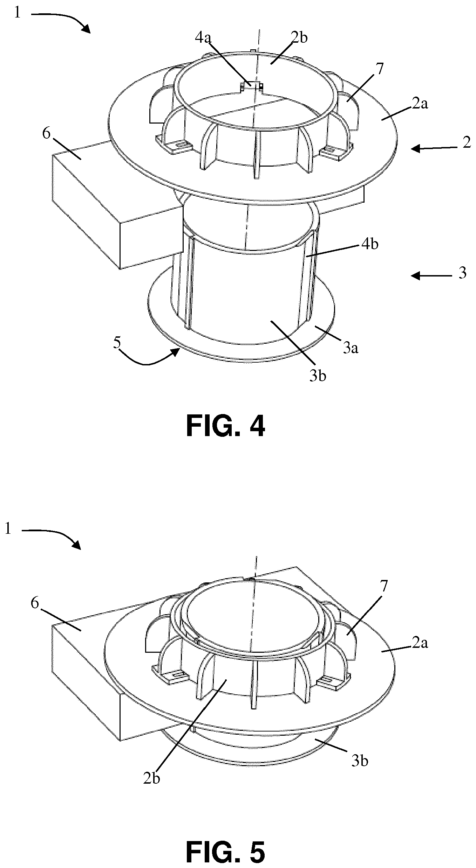

The ceiling or wall part 2 and the device holding part 3 further comprise connecting means 4a, 4b adapted for removably fixing the device holding part 3 to the ceiling or wall part 2. The connecting means 4a, 4b is such that, when installed, the ceiling or wall 6 is in between the ceiling or wall part 2 and the device holding part 3. This can be seen in Figs. 4 and 5. The connecting means may comprise a first part 4a and a second part 4b. The first and second part are complementary parts 4a, 4b, one part 4a is located on the ceiling or wall part 2 and the other part 4b is located on the device holding part 3. According to the present embodiment, the first part of the connecting means 4a, 4b may comprise at least one barb 4a on the ceiling or wall part 2 and the second part of the connecting means may comprise a barb guide 4b on the device holding part 3. The ceiling or wall part 2 and the device holding part 3 may be fixed by sliding the device holding part 3 into the ceiling or wall part 2 such that the at least one barb 4a on the ceiling or wall part 2 slides into the at least one barb guide 4b on the device holding part 3. When both parts 2, 3 are in the right position, the device holding part 3 is turned in clockwise direction such that the barb 4a is forced out of the barb guide 4 and the ceiling or wall part 2 and device holding part 3 are fixedly connected to each other. In other words, fixing is done by means of a combination of a linear movement and a rotating movement. In the present embodiment, first a linear movement is done followed by the rotating movement. Rotating movement is done in clockwise direction, however, according to other embodiments, the connecting means 4a, 4b may also be adapted such that fixing is done by rotating movement in counter clockwise direction For releasing both parts 2, 3 from each other and thus for removing the mounting system from the ceiling or wall 6, the device holding part 3 may be turned in opposite direction as was used for fixing both parts 2, 3 such that it can be slid out of the ceiling or wall part 2. The connecting means 4a, 4b may further be adapted for, when being installed, adjusting the distance between the ceiling or wall part 2 and the device holding part 3. According to the present embodiment, in case of the barb 4a and the barb guide 4b, the distance between the ceiling or wall part 2 and the device holding part 3 can be adjusted or determined by, before turning the device holding part 3 in clockwise direction, sliding it up to the right position such that the ceiling or wall 6 is fixed between the ceiling or wall part 2 and the device holding part 3 of the mounting system 1. The device holding part 3 further comprises a cavity 5 for receiving the ceiling or wall device such as e.g. a sensor, lighting means, a speaker or the like (see also further). According to other embodiments, the ceiling or wall device may be integrally formed with the device holding part 3 of the mounting system 1 so as to form one part.

Figs. 4 and 5 are not covered by the present invention nevertheless they illustrate the mounting system 1 according to the first embodiment when fixing the mounting system 1 to the ceiling or wall 6. Fig. 4 shows the mounting system 1 in an open position while Fig. 5 shows the mounting system 1 in a closed or installed position. In the embodiment illustrated in Figs. 4 and 5, the ceiling or wall part 2 is connected to the device holding part 3 with the first part 2a being closest to the device holding part 3, i.e. such that the second part 2b extends from the first part 2a in a direction substantially perpendicular to a plane of the first part 2a and away from the device holding part 3, i.e. extending upwards. In other words, the first part 2a of the ceiling or wall part 2 is facing the ceiling 6 while the second part 2b of the ceiling or wall part 2 extends away from the ceiling 6 and is located above the ceiling 6. However, according to other embodiments (not shown in the drawings), the ceiling or wall part 2 can also be oriented the other way around, such that the second part 2b of the ceiling or wall part 2 is located in the ceiling 6. For this purpose, the second part 2b of the ceiling or wall part 2 may comprise, at its outer surface, means 7 for further fixing the mounting system 1 in the ceiling or wall 6. This will allow a secure and reliable mounting of the ceiling or wall device in or on the ceiling or wall 6. According to the present embodiment, the means 7 for further fixing the mounting system 1 in the ceiling or wall 6 may comprise at least one rim 7, and may preferably comprise a plurality of rims 7. The plurality of rims 7 may be distributed along at least part of the circumference of an outer surface of the second part 2b of the ceiling or wall part 2. According to embodiments of the invention and as illustrated in Figs. 1A, 2 and 3 the rims 7 may be evenly distributed along the complete outer circumference of the second part 2b of the ceiling or wall part 2. However, according to other embodiments of the invention, the rims 7 may be distribute along only part of the outer circumference of the second part 2b of the ceiling or wall part 2 (not shown).

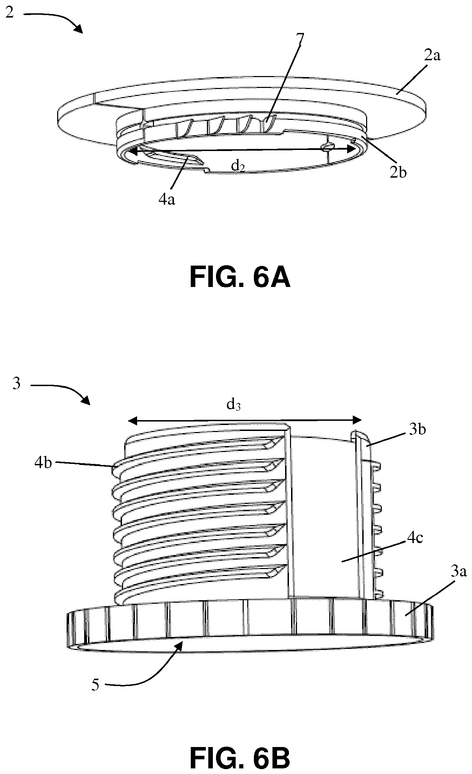

A further embodiment of a mounting system 1 according to the invention is shown in Figs. 6A and 6B, 7 and 8. Also according to this embodiment, the mounting system 1 comprises a ceiling or wall part 2 and a device holding part 3. The ceiling or wall part 2 (see Fig. 6A) is for being provided in a ceiling or wall 6 of a building. The ceiling or wall part 2 may comprise a first part 2a lying in a first plane and a second part 2b lying in a second plane substantially perpendicular to the first plane. Similar as for the embodiment described above, the first part 2a is formed integrally with the second part 2b so as to form one part. The device holding part 3 may also comprise two parts 3a, 3b which are integrally formed so as to constitute one part (see Fig. 6B). The first part 3a lies in a first plane and the second part 3b lies in a second plane substantially perpendicular to the first plane. The second part 2b of the ceiling or wall part 2 and the second part 3b of the device holding part 3 may both have the shape of a hollow cylinder, so that cables for connecting the home automation system element to the mains can go through it (not shown, see further). Further, the diameter d2 of the second part 2b ceiling or wall part 2 may be slightly bigger than the diameter d3 of the second part 3b of the device holding part 3, such that for connecting the ceiling or wall part 2 and the device holding part 3, the second part 3b of the device holding part 3 can be provided into the second part 2b of the ceiling or wall part 2.

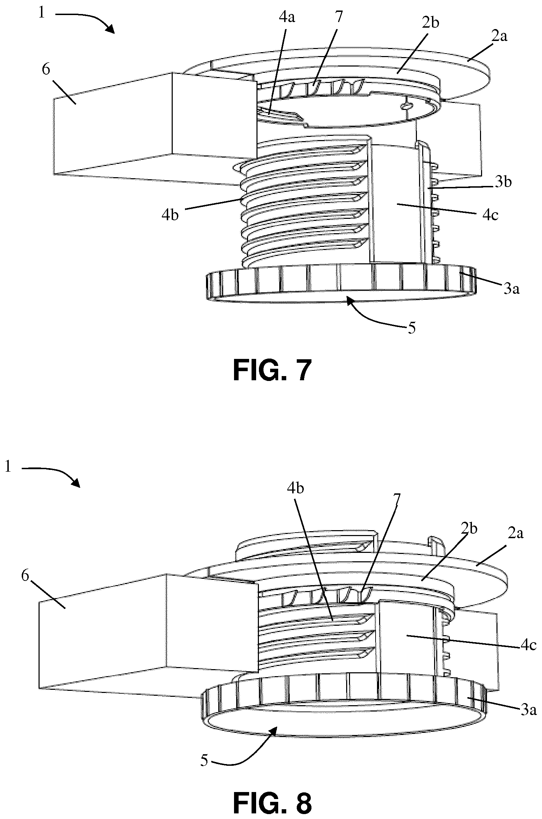

The ceiling or wall part 2 and the device holding part 3 further comprise connecting means 4a, 4b adapted for removably fixing the device holding part 3 to the ceiling or wall part 2. The connecting means 4a, 4b is such that, when installed, the ceiling or wall 6 is in between the ceiling or wall part 2 and the device holding part 3. This can be seen in Figs. 7 and 8. The connecting means comprise a first part 4a and a second part 4b, 4c. The first and second part are two complementary parts, one part 4a is located on the ceiling or wall part 2 and another part 4b, 4c is located on the device holding part 3. According to the present embodiment, the first part of the connecting means comprise at least one rib 4a on the ceiling or wall part 2, more particularly on an inner surface of the second part 2b of the ceiling or wall part 2. Further, the second part of the connecting means comprise at least one partial screw thread 4b on the device holding part 3, more particular on an outer surface of the second part 3b of the device holding part 3. With partial screw thread 4b is meant a screw thread 4b that does not cover the whole circumference of the second part 3b of the device holding part 3. In the example given, the connecting means may comprise two ribs 4a on an inner surface of the second part of the ceiling or wall part 2 (only one shown) and two partial screw threads 4b on the outer surface of the second part 3b of the device holding part 3. The two partial screw threads 4b on the device holding part 3 are separated by two rib guiding parts 4c. For fixing the ceiling or wall part 2 and the device holding part 3 together, the device holding part 3 is slid into the ceiling or wall part 2, the ribs 4a thereby sliding in the rib guiding parts 4c. When the device holding part 3 is at the right position, a clockwise turn may be made so as to fix the ribs 4a on the ceiling or wall part 2 in between the partial screw threads 4b on the device holding part 3. Preferably the clockwise turn may be made over 120°. Hence, according to the present embodiment, fixing the device holding part 3 to the ceiling or wall part 2, comprises the combination of a linear movement and a rotating movement. For removing the device holding part 3 from the ceiling or wall part 2, a counter clockwise turn may be performed, so as to release the ribs 4a from the partial threads 4b and thus to bring the ribs 4a back into the rib guiding parts 4c so as to be able to remove the device holding part 3 from the ceiling or wall part 2.

The distance between the ceiling or wall part 2 and the device holding part 3 can be adjusted depending on the kind of ceiling or wall 6 and thus depending on the thickness of the ceiling or wall 6. This is because the partial screw threads are provided over the whole length of the second part 3b of the device holding part 3. The device holding part 3 can be pushed over the ceiling or wall part 2 as far as necessary, i.e. until the ceiling or wall 6 is clamped between the ceiling or wall part 2 and the device holding part 3, before the clockwise turn is made to fixedly connecting the ceiling or wall part 2 and the device holding part 3.

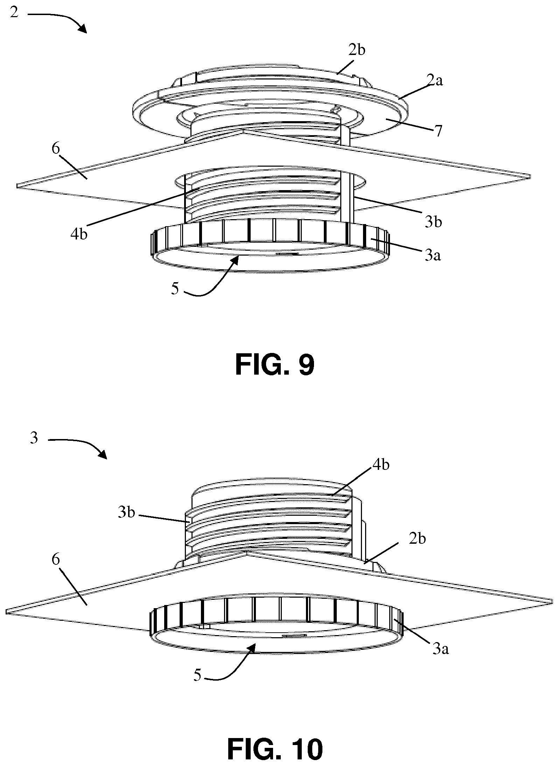

This is further illustrated in Figs 9 and 10, where the ceiling or wall 6 is much smaller than the ceiling or wall 6 in the embodiment illustrated in Figs. 7 and 8. The ceiling or wall part 2 and the device holding part 3 are identical to these parts in the embodiment illustrated in Figs. 6A and 6B, 7 and 8, but now the device holding part 3 is further slid onto the ceiling or wall part 2 so as to make the distance between the ceiling or wall part 2 and the device holding part 3 smaller. This illustrates that, no matter what the thickness of the ceiling or wall 6 is, the mounting system 1 can be fixed very well, without the need for screws, and without losing on the robustness of the mounted assembly, i.e. without losing reliability of the mounting system 1. In other words, the ceiling or wall device can in all cases fixedly be mounted on or in a ceiling or wall 6. Similar as the embodiment above, the device holding part 3 may further comprise a cavity 5 for receiving the ceiling or wall device. As also mentioned for the embodiment above, the ceiling or wall device may also be integrally formed with the device holding part 3 of the mounting system 1 so as to form one part.

Figs. 7 and 8 and 9 and 10 illustrate the fixing of the mounting system 1 according to the second embodiment to the ceiling or wall 6. Fig. 7 shows the mounting system 1 according to one embodiment in an open position while Fig. 8 shows that mounting system 1 in a closed or installed position. It can be seen from these figures that there is a difference in mounting the ceiling or wall part 2. In the embodiment illustrated in Figs. 7 and 8, the ceiling or wall part 2 is oriented such that, when installed, the second part 2b is located in the ceiling or wall 6. In other words, the second part 2b of the ceiling or wall part 2 is oriented in a direction perpendicular to the plane of the first part 2a and extending in a direction towards the second part 3b of the device holding part 3. For allowing a secure and reliable mounting of the ceiling or wall device in or on the ceiling or wall 6, the second part 2b of the ceiling or wall part 2 may further comprise, at its outer surface, means 7 for further fixing the mounting system 1 in the ceiling or wall 6. According to the present embodiment, the means 7 for further fixing the mounting system 1 in the ceiling or wall 6 may comprise at least one rim 7. According to embodiments of the invention and as illustrated in Figs. 6A, 7 and 8, a plurality of rims 7 may be provided on a part of the outer circumference of the second part 2b of the ceiling or wall part 2. However, according to other embodiments of the invention, a plurality of rims 7 may be provided along the complete outer circumference of the second part 2b of the ceiling or wall part 2. According to still further embodiments of the invention, only one rim 7 may be provided on the outer circumference of the second part 2b of the ceiling or wall part 2.

Another embodiment is shown in Fig. 9 and Fig. 10, which respectively show the mounting system 1 in an open position and in a closed or installed position. According to this embodiment, the ceiling or wall part 2 may be oriented such that the first part 2a is facing the ceiling or wall 6 and the second part 2b is extending from the first part 2a in a direction away from the ceiling or wall 6. According to this embodiment, the means 7 for further fixing the mounting system 1 to the ceiling or wall 6 may comprise at least one magnet 7. According to embodiments and as illustrated in Fig. 9, one big magnet 7 may be provided on a surface of the first part 2a opposite to the surface on which the second part 2b is provided. As can be seen in Fig. 9, the magnet 7 may extend over the complete circumference of the first part 2a. However, according to further embodiments, a plurality of (smaller) magnets 7 may be provided along the circumference of the first part 2a (see further).

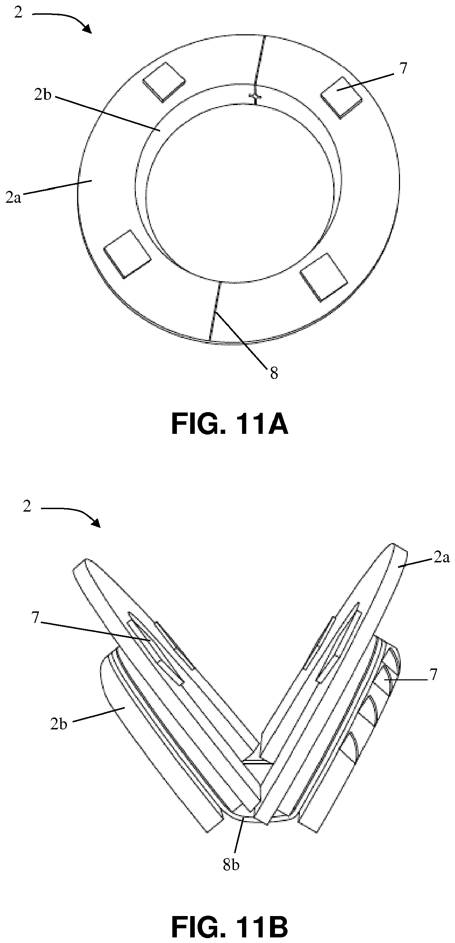

The above embodiments may be suitable for being used with any kind of ceiling or wall 6, whether part of the ceiling or wall can be removed or not, i.e. whether the ceiling or wall 6 is a fixed ceiling or wall 6 or comprises removable parts such as, for example, separate removable tiles. However, in case the ceiling or wall 6 is fixed, i.e. when it does not comprise removable parts, then the problem may arise that the ceiling or wall part 2 cannot be provided through a hole in the ceiling or wall 6. In such cases, although not covered by the claims, the ceiling or wall part 2 may be made foldable. This is illustrated in Figs. 11A and 11B, which respectively show the ceiling or wall part 2 in a standard position, i.e. the position in which it is after being installed, and in a folded position. By making the ceiling or wall part 2 foldable, it can be folded for being provided above a ceiling or in a wall 6 through a hole, after which it then can be unfolded to be brought into the position for fixing the device holding part 3 to it.

According to these embodiments, not covered by the claims, the ceiling or wall part 2 may comprise fold lines 8 along which it can be folded. These fold lines 8 may be formed by making the material of the ceiling or wall part 2 less thick in these areas than in the rest of the ceiling or wall part 2. According to other embodiments, the ceiling or wall part 2 may be made foldable by providing, instead of the fold lines 8, living hinges (not shown) or by making the ceiling or wall part 2 out of two parts, i.e. each forming half a circle, and connecting these part by providing a rubber ring 8b for connecting the two parts together (see Fig. 11B).

Figs. 11A and 11B further illustrate another embodiment of the means 7 for further fixing the mounting system 1 to the ceiling or wall 6. According to the present embodiment, this means 7 may comprise a plurality of small magnets 7, in the example given four, which are evenly distributed on the first part 2a of the ceiling or wall part 2 along its circumference.

Still further, Fig. 9B also illustrates that the ceiling or wall part 2 may comprise two different means 7 for further fixing the mounting system 1 on or in the ceiling or wall 6. In the example of Fig. 9 the ceiling or wall part 2 comprises four magnets 7 on its first part 2a and a plurality of rims 7 on part of the circumference of the second part 2b. According to the invention the ceiling or wall part 2 comprises a split 8c.

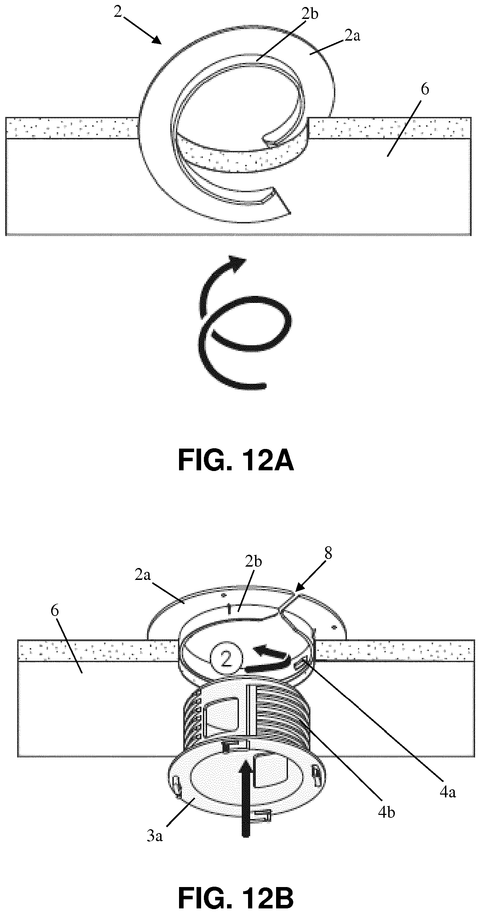

This makes the ceiling or wall part 2 "twistable". With twistable is meant that both sides of the split can be torn away in opposite directions so as to deform the ceiling or wall part 2 in order to be able to put it through a hole in the ceiling or in the wall 6. This is illustrated in Fig. 12A. The ceiling or wall part 2 may thus be twisted or torn for putting through a hole in the ceiling. When the ceiling or wall part 2 is in the ceiling, it can be "untwisted" again and put in the original position, as illustrated in Fig. 12B. The device holding part 3 may then be fixed to the ceiling or wall part 2 as described in the embodiments above.

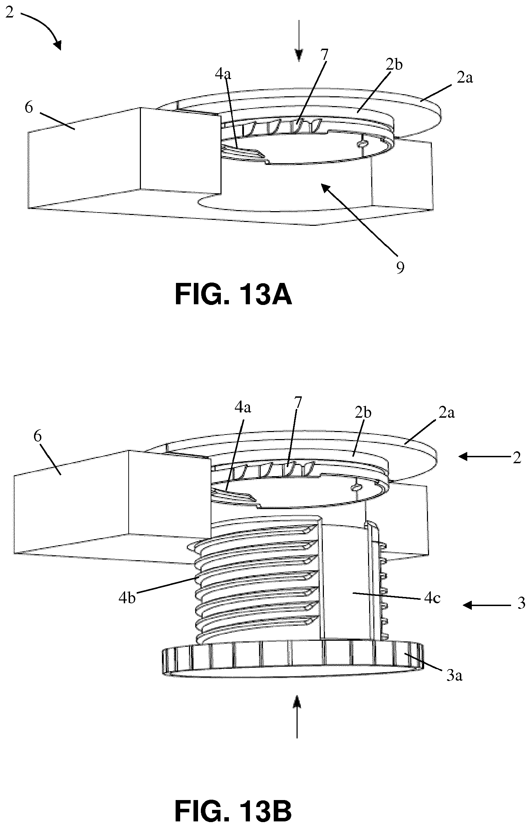

A second aspect, not part of the present invention also provides a method for mounting a ceiling or wall device in or on a ceiling or wall 6, thereby using a mounting system 1 as described in the embodiments above. An embodiment of the method according to the invention is illustrated in Figs. 13A to 13D. In a first step of the method, after providing the mounting system 1, the ceiling or wall part 2 is provided on a first side of the ceiling or wall 6 (see Fig. 13A). This can be done by, for example, removing a removable part of the ceiling or wall 6, such as for example a removable tile. When the ceiling or wall part 2 is provided at a first side of the ceiling or wall 6, it may be pushed into the ceiling or wall 6, as illustrated by the arrow in Fig. 13A, so as to be fixed into a hole 9 of the ceiling or wall 6. The means 7 for further fixing the mounting system 1 in the ceiling or wall 6, in the example given rims 7, are hereby clamped in the ceiling or wall 6 so as to reliably and securely fixing the mounting system 1 to the ceiling or wall 6. It has to be noted that according to other embodiments of the invention, where for example magnets 7 are provided, the ceiling or wall part 2 may be pushed against the ceiling or wall 6 so as to further fix it to the ceiling or wall 6.

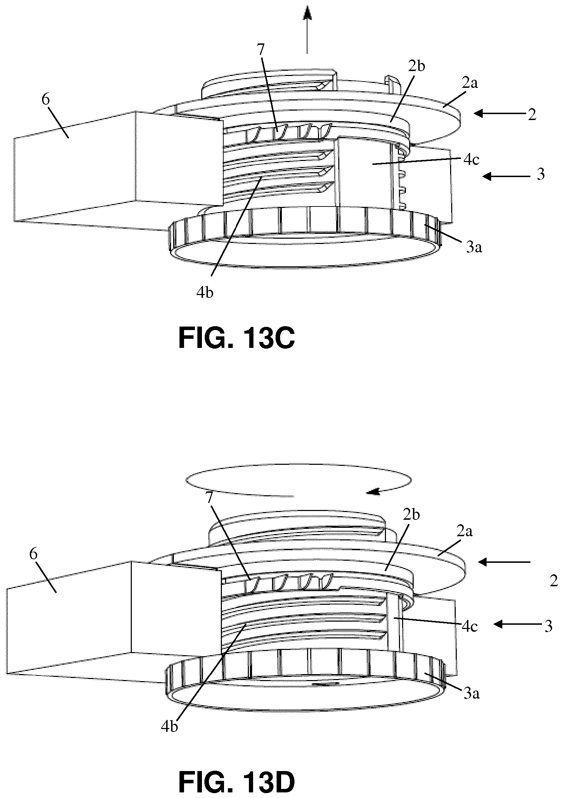

In a second step, which is illustrated in Fig. 13B, the device holding part 3 is provided at a second side of the ceiling or wall 6, the second side being opposite to the first side. The second part 3b of the device holding part 3 is hereby provided through the hole 9 in the ceiling or wall 6 and is pushed into the ceiling or wall part 2 in a direction as illustrated by the arrow in Fig. 13C. The device holding part 3 is then removably fixed to the ceiling or wall part 2 by means of the connecting means 4a, 4b, such that the ceiling or wall 6 is clamped between the ceiling or wall part 2 and the device holding part 3. The connecting means 4a, 4b is provided on respectively the second part 2b of the ceiling or wall part 2 and the second part 3b of the device holding part 3. In the example given, the connecting means 4a, 4b may comprise two ribs 4a on an inner surface of the second part 2b of the ceiling or wall part and two partial screw threads 4b on the outer surface of the second part 3b of the device holding part 3. When the device holding part 3 is at the right position, i.e. when the ceiling or wall 6 is clamped between the ceiling or wall part 2 and the device holding part 3, the device holding part 3 may be clockwise turned over 120°, as illustrated by the arrow in Fig. 13D, so as to fixedly connecting the device holding part 3 to the ceiling or wall part 2. In other words, in this step, the ceiling or wall part (2) and the device holding part (3) are removably fixed together by means of a combination of a linear movement and a rotating movement.

When the mounting system 1 is mounted, the ceiling or wall part 2 it not visible to a user in the room. In mounted position only the second part 3b of the device holding part 3 may be visible.

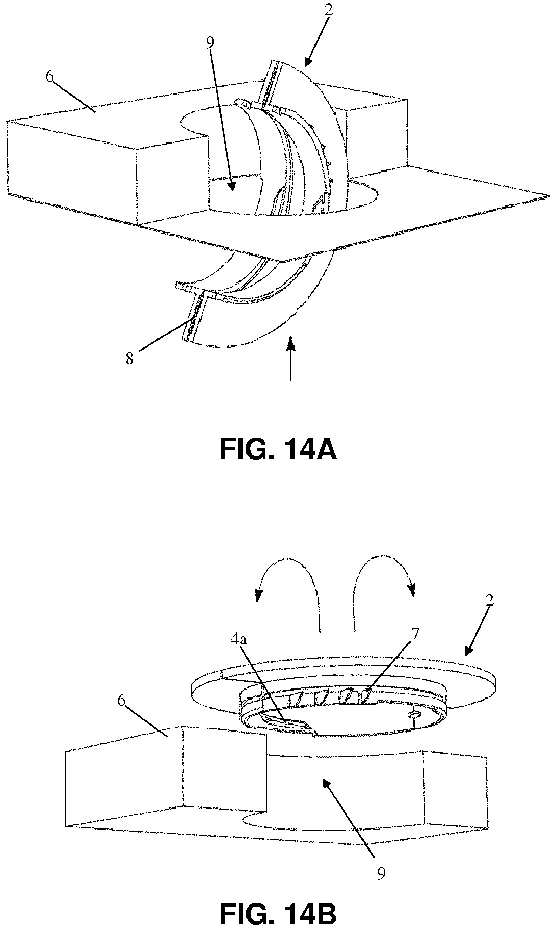

According to embodiments of the invention which are especially useful when the ceiling or wall 6 is a fixed ceiling or wall which does not comprise removable parts, the method may furthermore comprise, before providing the ceiling or wall part 2 on a first side of the ceiling or wall 6, folding the ceiling or wall part 2. In that way the ceiling or wall part 2 can easily be provided through a hole 9 in a ceiling or wall 6. This is illustrated in Fig. 14A. After the ceiling or wall part 2 has been provided through the hole 9, and is thus present at a first side of the ceiling or wall 6, it may be unfolded as illustrated by the arrows in Fig. 14B.

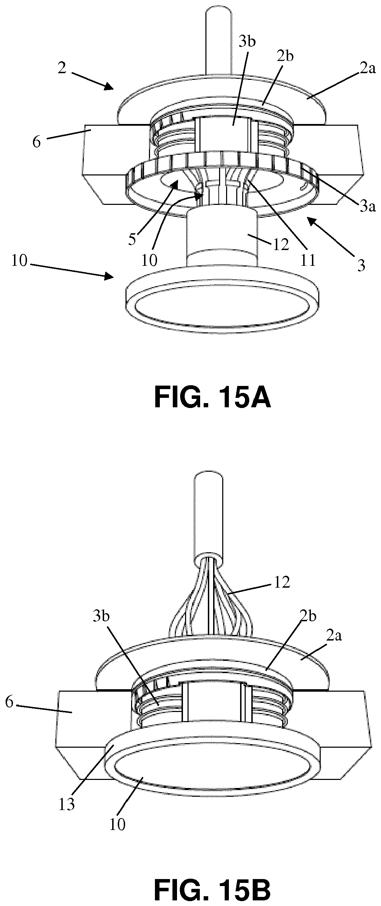

The method may the furthermore comprise providing a ceiling or wall device 10, such as, for example, sensors, controllers, actuators, lighting means, speakers or the like. The ceiling or wall device 10 may then, through the device holding part 3 and the ceiling or wall part 2, be connected to cables 11 of the mains. For the purpose of this, a cylindrical connector 12 may be used. The connector 12 may comprise sleeves for receiving the cables 11, as can be seen from Fig. 15A. After having connected the cables 11 to the home automation system element 10, the home automation system element 10 may be fixed to the device holding part 3. This may be done by, for example, clicking an outer edge 13 of the ceiling or wall device 10 over or on an outer edge of the first part 3a of the device holding part 3 (see Fig. 15B). The device holding part 3 may, for that purpose, further comprise small protrusions 13 at its outer side.

## Claims

1. A mounting system (1) for mounting a ceiling or wall device in or on a ceiling or wall (6), the mounting system (1) comprising a ceiling or wall part (2) for being provided in or on the ceiling or wall (6), and a device holding part (3) for receiving the ceiling or wall device (10), the ceiling or wall part (2) and the device holding part (3) comprising connecting means (4a, 4b, 4c) adapted for removably fixing the device holding part (3) to the ceiling or wall part (2), such that, when installed, the ceiling or wall part (2) is provided on a first side of the ceiling or wall (6) and the device holding part (3) is provided on a second side of the ceiling or wall (6) opposite to the first side, wherein a part (3b) of the device holding part (3) is adapted to be provided through a hole (9) of the ceiling or wall(6), so that the ceiling or wall (6) is clamped between the ceiling or wall part (2) and the device holding part (3), wherein the connecting means (4a, 4b) on the device holding part (3) and the ceiling or wall part (2) comprise a first part (4a) and a second part (4b, 4c) for removably fixing the device holding part (3) to the ceiling or wall part (2) by means of a combination of a linear movement and a rotating movement, and wherein the ceiling or wall part (2) comprises a split (28), wherein
- both sides of the split (8c) can be torn away from each other in opposite directions so as to deform the ceiling or wall part (2) to put it through the hole in the ceiling or wall (6), and **characterised in that**
- the connecting means (4a, 4b, 4c) is further adapted for, when being installed, adjusting the distance between the ceiling or wall part (2) and the device holding part (3), wherein the connecting means (4b) comprise at least one partial screw thread on the device holding part (3) for removably fixing the device holding part by a rotating movement, and further a guide (4c) on the device holding part (3) for removably fixing the device holding part by a linear movement and wherein the first part of the connecting means comprises at least one barb or at least one rib (4a) on the ceiling or wall part (2) for engaging with the guide (4c) and with the partial screw thread.

2. A mounting system (1) according to any of the previous claims, wherein ceiling or wall part (2) comprises means (7) for further fixing the mounting system (1) in or to the ceiling or wall (6).

3. A mounting system (1) according to claim 2, the ceiling or wall part (6) comprising a fist part (2a) lying in a first plane and a second part (2b) attached to the first part (2a) and lying in a second plane substantially perpendicular to the first plane, wherein the means (7) for further fixing the mounting system (1) in or to the ceiling or wall (6) is provided on an outer surface of the second part (2b).

4. A mounting system (1) according to claim 2, the ceiling or wall part (6) comprising a fist part (2a) lying in a first plane and a second part (2b) attached to the first part (2a) and lying in a second plane substantially perpendicular to the first plane, wherein the means (7) for further fixing the mounting system (1) in or to the ceiling or wall (6) is provided on a surface of the first part (2a).

5. A mounting system (1) according to any of claims 2 to 4, wherein the means (7) for further fixing the mounting system (1) in the ceiling or wall (6) comprises at least one rim or at least one magnet.

6. A mounting system (1) according to any of the previous claims, wherein the ceiling or wall device (10) is one of a sensor, a controller, an actuator, lighting means or a speaker.

7. A mounting system (1) according to any of the previous claims, wherein the ceiling or wall device (10) is formed integrally with the device holding part (2) of the mounting system (1).

## Patentansprüche

1. Montagesystem (1) zum Montieren einer Decken- oder Wandvorrichtung in oder an einer Decke oder Wand (6), das Montagesystem (1) umfassend ein Decken- oder Wandteil (2), um in oder auf der Decke oder Wand (6) bereitgestellt zu werden und ein Vorrichtungshalteteil (3) zum Aufnehmen der Decken- oder Wandvorrichtung (10), das Decken- oder Wandteil (2) und das Vorrichtungshalteteil (3) umfassend Verbindungsmittel (4a, 4b, 4c), die zum lösbaren Befestigen des Vorrichtungshalteteils (3) an dem Decken- oder Wandteil (2) derart angepasst sind, dass, wenn sie installiert sind, das Decken- oder Wandteil (2) auf einer ersten Seite der Decke oder Wand (6) bereitgestellt ist, und das Vorrichtungshalteteil (3) auf einer zweiten entgegengesetzten Seite der Decke oder Wand (6) bereitgestellt ist, wobei ein Teil (3b) des Vorrichtungshalteteils (3) angepasst ist, um durch ein Loch (9) der Decke oder Wand (6) bereitgestellt zu werden, so dass die Decke oder Wand (6) zwischen dem Decken- oder Wandteil (2) und dem Vorrichtungshalteteil (3) geklemmt ist, wobei die Verbindungsmittel (4a, 4b) auf dem Vorrichtungshalteteil (3) und dem Decken- oder Wandteil (2) einen ersten Teil (4a) und einen zweiten Teil (4b, 4c) umfassen, zum lösbaren Befestigen des Vorrichtungshalteteils (3) an das Decken- oder Wandteil (2) mittels einer Kombination von einer linearen Bewegung und einer Drehbewegung, und wobei das Decken- oder Wandteil (2) einen Spalt (28) umfasst, wobei
- beide Seiten des Spalts (8c) in entgegengesetzten Richtungen voneinander weggerissen werden können, um das Decken- oder Wandteil (2) zu verformen, um es durch das Loch in der Decke oder Wand (6) zu bringen, und **dadurch gekennzeichnet, dass**
- die Verbindungsmittel (4a, 4b, 4c) ferner angepasst sind, zum, wenn sie installiert werden, Einstellen des Abstands zwischen dem Decken- oder Wandteil (2) und des Vorrichtungshalteteils (3), wobei die Verbindungsmittel (4b) mindestens ein Teilschraubengewinde auf dem Vorrichtungshalteteil (3) zum lösbaren Befestigen des Vorrichtungshalteteils durch eine Drehbewegung und ferner eine Führung (4c) auf dem Vorrichtungshalteteil (3) zum lösbaren Befestigen des Vorrichtungshalteteils durch eine lineare Bewegung umfassen, und wobei der erste Teil der Verbindungsmittel mindestens einen Widerhaken oder mindestens eine Rippe (4a) auf dem Decken- oder Wandteil (2) zum Eingreifen mit der Führung (4c) und mit dem Teilschraubengewinde umfassen.

2. Montagesystem (1) nach einem der vorstehenden Ansprüche, wobei das Decken- oder Wandteil (2) ein Mittel (7) zum weiteren Befestigen des Montagesystems (1) in oder an der Decke oder Wand (6) umfasst.

3. Montagesystem (1) nach Anspruch 2, das Decken- oder Wandteil (6) umfassend einen ersten Teil (2a), der in einer ersten Ebene liegt, und einen zweiten Teil (2b), der an dem ersten Teil (2a) angebracht ist und in einer zweiten Ebene, die im Wesentlichen senkrecht zu der ersten Ebene ist, liegt, wobei das Mittel (7) zum weiteren Befestigen des Montagesystems (1) in oder an der Decke oder Wand (6) an einer Außenoberfläche des zweiten Teils (2b) bereitgestellt ist.

4. Montagesystem (1) nach Anspruch 2, das Decken- oder Wandteil (6) umfassend einen ersten Teil (2a), der in einer ersten Ebene liegt, und einen zweiten Teil (2b), der an dem ersten Teil (2a) angebracht ist und in einer zweiten Ebene, die im Wesentlichen senkrecht zu der ersten Ebene ist, liegt, wobei das Mittel (7) zum weiteren Befestigen des Montagesystems (1) in oder an der Decke oder Wand (6) auf einer Oberfläche des ersten Teils (2a) bereitgestellt ist.

5. Montagesystem (1) nach einem der Ansprüche 2 bis 4, wobei das Mittel (7) zum weiteren Befestigen des Montagesystems (1) in der Decke oder Wand (6) mindestens einen Rand oder mindestens einen Magneten umfasst.

6. Montagesystem (1) nach einem der vorstehenden Ansprüche, wobei die Decken- oder Wandvorrichtung (10) eines von einem Sensor, einer Steuerung, einem Aktuator, Leuchtmitteln oder einem Lautsprecher ist.

7. Montagesystem (1) nach einem der vorstehenden Ansprüche, wobei die Decken- oder Wandvorrichtung (10) mit dem Vorrichtungshalteteil (2) des Montagesystems (1) einstückig ausgebildet ist.

## Revendications

1. Système de montage (1) destiné à monter un dispositif de plafond ou de paroi dans ou sur un plafond ou une paroi (6), le système de montage (1) comprenant une partie de plafond ou de paroi (2) destinée à être placée dans ou sur le plafond ou la paroi (6), et une partie de maintien de dispositif (3) pour recevoir le dispositif de plafond ou de paroi (10), la partie de plafond ou de paroi (2) et la partie de maintien de dispositif (3) comprenant des moyens de raccordement (4a, 4b, 4c) adaptés pour fixer de manière amovible la partie de maintien de dispositif (3) à la partie de plafond ou de paroi (2), de telle sorte que, lorsqu'il est installé, la partie de plafond ou de paroi (2) est placée sur un premier côté du plafond ou de la paroi (6) et la partie de maintien de dispositif (3) est placée sur un second côté du plafond ou de la paroi (6) opposé au premier côté, dans lequel une partie (3b) de la partie de maintien de dispositif (3) est adaptée pour être placée à travers un trou (9) du plafond ou de la paroi (6), de sorte que le plafond ou la paroi (6) est serré entre la partie de plafond ou de paroi (2) et la partie de maintien de dispositif (3), dans lequel les moyens de raccordement (4a, 4b) sur la partie de maintien de dispositif (3) et la partie de plafond ou de paroi (2) comprennent une première partie (4a) et une seconde partie (4b, 4c) pour fixer de manière amovible la partie de maintien de dispositif (3) à la partie de plafond ou de paroi (2) au moyen d'une combinaison d'un mouvement linéaire et d'un mouvement rotatif, et dans lequel la partie de plafond ou de paroi (2) comprend une fente (28), dans laquelle
- les deux côtés de la fente (8c) peuvent être à distance l'un de l'autre dans des directions opposées de manière à déformer la partie de plafond ou de paroi (2) pour la placer à travers le trou dans le plafond ou la paroi (6), et **caractérisé en ce que**
- les moyens de raccordement (4a, 4b, 4c) sont en outre adaptés, lors de l'installation, pour ajuster la distance entre la partie de plafond ou de paroi (2) et la partie de maintien de dispositif (3), dans lesquels le moyen de raccordement (4b) comprend au moins un filetage de vis partiel sur la partie de maintien de dispositif (3) pour fixer de manière amovible la partie de maintien de dispositif par un mouvement rotatif, et en outre un guide (4c) sur la partie de maintien de dispositif (3) pour fixer de manière amovible la partie de maintien de dispositif par un mouvement linéaire et dans lesquels la première partie des moyens de raccordement comprend au moins un ardillon ou au moins une nervure (4a) sur la partie de plafond ou de paroi (2) pour venir en prise avec le guide (4c) et avec le filetage de vis partiel.

2. Système de montage (1) selon l'une quelconque des revendications précédentes, dans lequel la partie de plafond ou de paroi (2) comprend un moyen (7) pour fixer davantage le système de montage (1) dans ou au plafond ou sur la paroi (6).

3. Système de montage (1) selon la revendication 2, la partie de plafond ou de paroi (6) comprenant une première partie (2a) se trouvant dans un premier plan et une seconde partie (2b) fixée à la première partie (2a) et se trouvant dans un second plan sensiblement perpendiculaire au premier plan, dans lequel le moyen (7) pour fixer davantage le système de montage (1) dans ou au plafond ou sur la paroi (6) est placé sur une surface externe de la seconde partie (2b).

4. Système de montage (1) selon la revendication 2, la partie de plafond ou de paroi (6) comprenant une première partie (2a) se trouvant dans un premier plan et une seconde partie (2b) fixée à la première partie (2a) et se trouvant dans un second plan sensiblement perpendiculaire au premier plan, dans lequel le moyen (7) pour fixer davantage le système de montage (1) dans ou au plafond ou sur la paroi (6) est placé sur une surface de la première partie (2a).

5. Système de montage (1) selon l'une quelconque des revendications 2 à 4, dans lequel le moyen (7) pour fixer davantage le système de montage (1) dans le plafond ou la paroi (6) comprend au moins un rebord ou au moins un aimant.

6. Système de montage (1) selon l'une quelconque des revendications précédentes, dans lequel le dispositif de plafond ou de paroi (10) est l'un parmi un capteur, un dispositif de commande, un actionneur, un moyen d'éclairage ou un haut-parleur.

7. Système de montage (1) selon l'une quelconque des revendications précédentes, dans lequel le dispositif de plafond ou de paroi (10) est formé d'un seul tenant avec la partie de maintien de dispositif (2) du système de montage (1).
